# EUROPEAN PATENT SPECIFICATION

(11) **EP 3 697 670 B1**
(45) Date of publication and mention of the grant of the patent: **24.03.2021**
(21) Application number: 18788871.4
(22) Date of filing: 15.10.2018
(51) Int. Cl.: B62B 5/00

(54) **PUSHCHAIR**
KINDERWAGEN
POUSSETTE

(30) Priority: 17.10.2017 GB 201717013
(43) Date of publication of application: 26.08.2020
(73) Proprietor: Clifton, Russell, Wilmslow, Cheshire SK9 3QH (GB)
(72) Inventor: Clifton, Russell, Wilmslow, Cheshire SK9 3QH (GB)
(74) Representative: Beckham, Robert William
(86) International application number: PCT/GB2018/052954
(87) International publication number: WO 2019/077320

(56) References cited:
- WO-A1-2011/098791
- DE-U1-202005 008 369
- GB-A- 2 507 507
- US-A- D 688 602

## Description

### Technical Field

This invention relates to pushchairs for conveying children and babies. More particularly it relates to a mechanism to allow pushchairs and buggies to fold and unfold.

### Background Art

WO2011/098791A (Russell) describes an example of a foldable pushchair wheeled comprising an arcuate, in side view, telescopic rear frame having a lower part and an upper part with the lower part of the rear frame telescoping into the upper part of the rear frame and a front frame pivotally mounted on the upper part of the rear frame, in which the front frame can assume one of two stable positions, one an open position in which the front frame projects forwards and slightly downwards of the rear frame, and a second position in which it the pushchair is folded and the lower part of the rear frame is telescoped into the upper part of the rear frame, in which the front frame is locked substantially adjacent the upper part of the rear frame in the second position when in the second, folded, position.

The front frame is locked in position using a dog clutch, ratchet, friction device, locking pin or other suitable means Dokument GB2507507 describes another example of a foldable pushchair with telescoping members.

Practice has shown that an easier to use folding and locking mechanism, is required.

### Disclosure of Invention

In a first aspect of the present invention a pushchair comprises a rear frame and a second frame, rear wheels and a least one front wheel, the second frame pivotally mounted by a pair of pivot units on the rear frame, and in which the second frame may assume one of two stable positions with respect to the rear frame, the first position being a locked, unfolded position projecting substantially forwards with respect to the rear frame and the second, folded, position being substantially adjacent the rear frame when the pushchair is folded, wherein when the pushchair is unfolded, the second frame projects forwards of the rear frame, the rear wheels are mounted on the rear frame; the at least one front wheel is mounted on the second frame; the rear frame is arcuate in side view; each of the pivotal units is forward of a vertical plane between centres of the rear wheels and an upper part of the rear frame when the pushchair is in the unfolded position; wherein the rear frame comprises pairs of upper and lower spaced apart members which are telescopic, wherein the upper members telescope into the lower members, wherein the pivot units are mounted on the rear frame around the telescoping upper and lower members and whereby the rear frame has first latches through the upper members of the rear frame, said first latches releasing the upper members to telescope into the lower members; and whereby at least one upper member has an actuator to engage a link member to a second latch, whereby engagement of the second latch with the link member through telescoping of the rear frame releases the second latch to allow rotation of the second frame with respect to the rear frame.

The actuator is, for example, a stud projecting from the upper members.

In a further aspect of the invention, the pushchair has a seat frame back and a seat frame bottom mounted on the pivot units, the seat frame back being pivotal about the seat frame bottom wherein the seat frame back has at least one spring urged side extension and a releasing mechanism, said releasing mechanism releasing said a spring urged extension of the seat frame back from a pocket in the surface of a cam mounted in a pivot unit allowing the seat frame back to rotate, and the spring to drive the extensions into a pocket on the cam surface when the seat back releasing mechanism is released.

Ideally the pivot unit has a safety interlock preventing rotation of the second frame about the rear frame unless the seat is folded.

In a further development of the invention, in the normal seated or reclined positions, the telescoping rear frame is locked in the extended position, with the result that the actuator on the rear frame cannot be brought into contact with the second latch, until the seat back is folded against the seat bottom. This is an important safety feature, preventing accidental folding of the pushchair with a child still in the seat.

### Brief Description of Drawings

An embodiment of the invention will now be described with reference to the accompanying drawings, in which:
figure 1 shows a perspective view of an unfolded pushchair according to the invention ready for carrying a passenger;

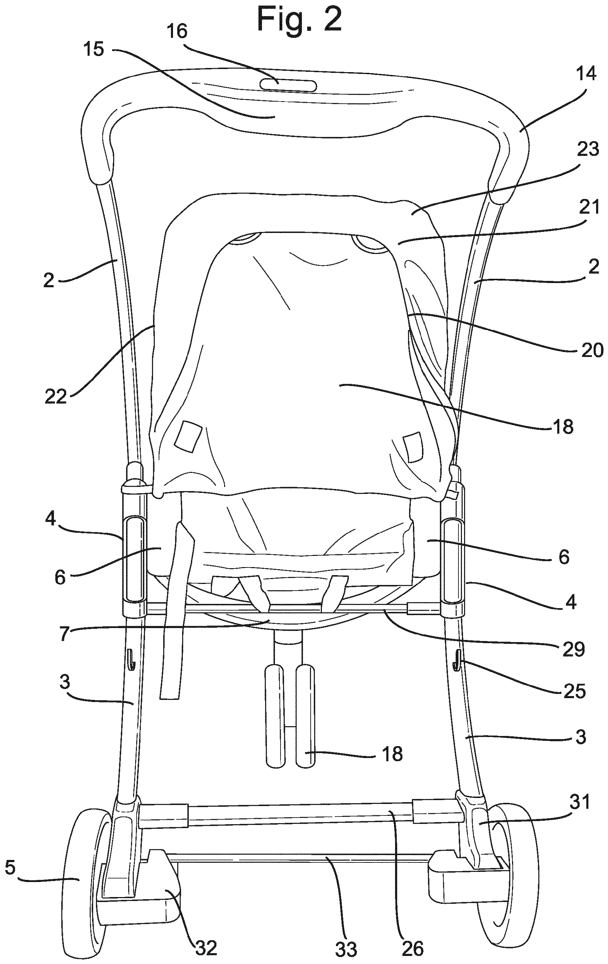

figure 2 is a rear view of the pushchair of figure 1;
figures 3A and 3B is a section of an upper and lower member showing the operation of the first latch;
figures 4A and 4B is a section of the pivot unit showing the operation of the second latch; and
figures 5A to 5D illustrate the seat folding mechanism and safety interlock.

### More detailed description of examples

In the figures, an example pushchair according to the invention comprises an arcuate, in side view, rear frame 1 and a second frame 7 pivotally mounted in a pair of a lockable pivot units 6. The second frame 7 projects forwards and slightly downwards from the rear frame 1. The rear frame comprises a pair of parallel arcuate upper members 2 and lower members 3. The rear frame can telescope with the upper members 2 telescoping into the lower members 3. The lockable pivot units 6 are mounted on first sleeves 4 fixed to the top of lower members 3 with the pivot units 6 forward of the rear frame 1. Wheels 5 are mounted on axles at the bottom of each of the pair of lower members 3. First sleeves 4 are fixed on the top of lower members 3 with upper members 2 able to slide into and out of the first sleeves sleeve 4, upper members 2 being held in its push chair open position by a first latches 37 (described below).

Each pivot unit 6 has a sleeve 9 mounted on a rotatable member 10 of the pivot unit 6, The second frame 7 is generally of a U shape with the ends of arms of the U being mounted in the sleeves 9, each end into a corresponding sleeve 9 of each pivot unit 4. The front of second frame 7 is mounted on a pivoting wheel or pair of wheels 8. Optionally these wheels 8 may fold under the frame when the pushchair is folded.

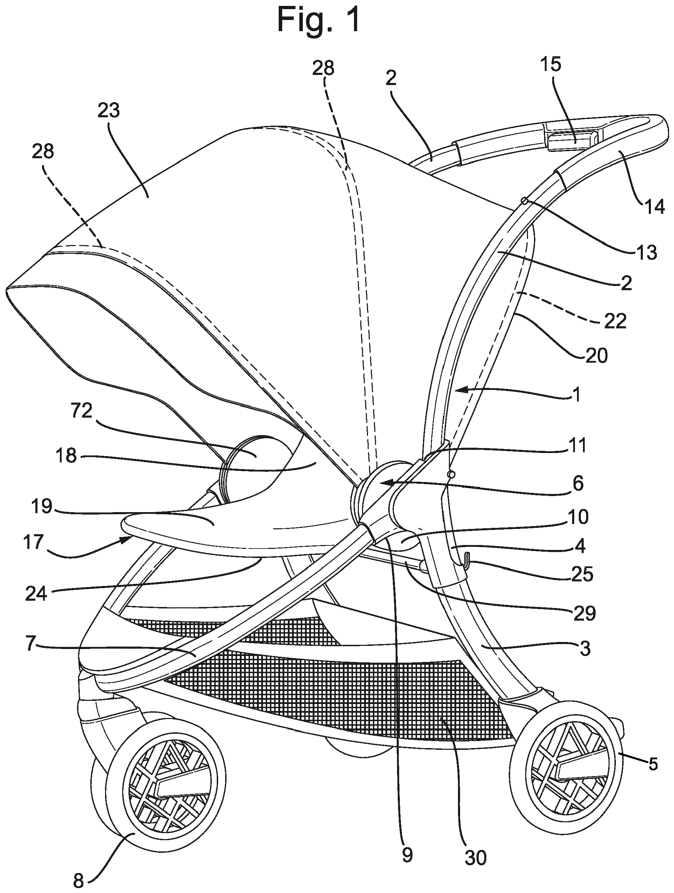

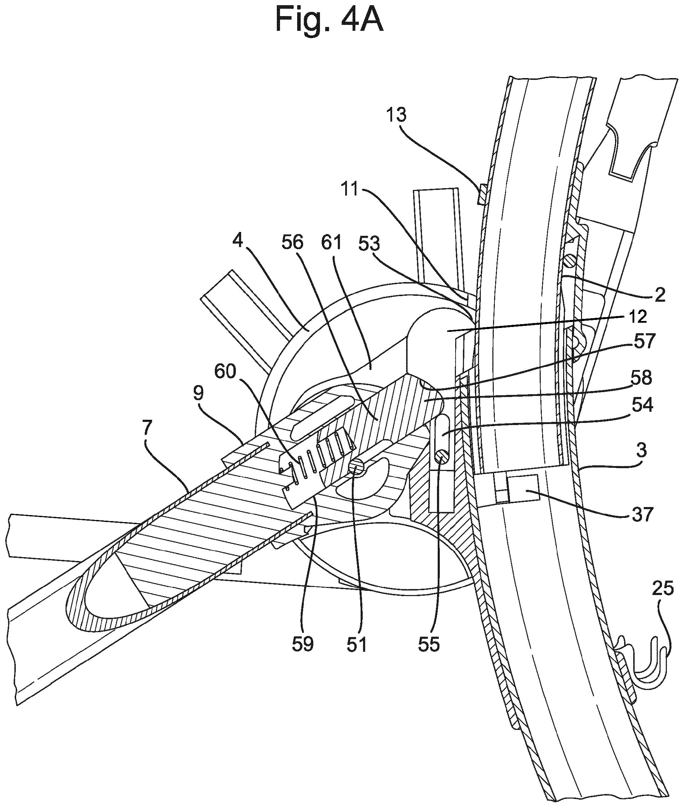

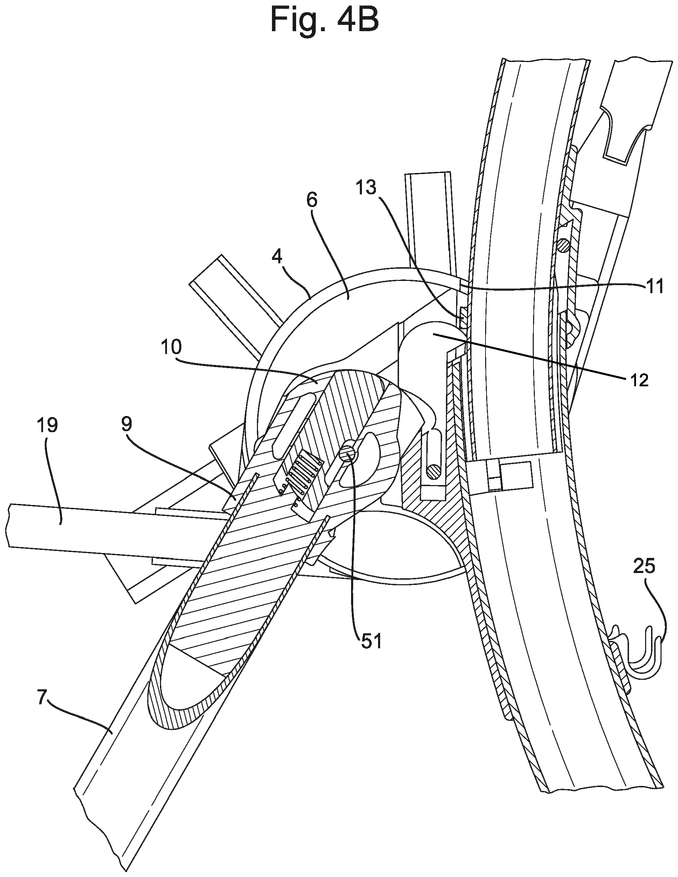

Each sleeve 4 also has an aperture 11 at its top through which a fixed actuator 13, in the form of a small stud, on each member may pass to contact the surface 53 of link member 12 to a spring urged second latch 56 (items 12, 53 and 56 are not visible in figure 1 but are discussed below in relations to figures 4) . In operation the actuators 13 depress link members 12 as described below. This has the effect of releasing the pivot unit so that the second frame 7 can rotate about the rear frame 1.

The tops of the upper members 2 are joined by a U-shaped handle piece 14. In the centre of the handle piece, is a release button 15, which is linked to a cable running down each of the upper members 2 to a first latch (not visible in figure 1 but discussed below), which link each upper member 2 and the corresponding lower member 3 in rear frame 1. Release of each the first latches 37 allow the relevant upper member 2 to telescope into the corresponding lower member 3, which in turn brings the actuators 13 into contact with the link member 12, allowing the second frame 7 to pivot about the rear frame 1. A safety interlock 16 is provided to prevent accidental operation of the release button 15. The release button and interlock are of conventional design. A seat unit 17 is mounted on and between the pairs of pivot units 6. The seat unit could also be further supported on an additional cross member between the pair of pivot units 6, but this is not the case in this example.

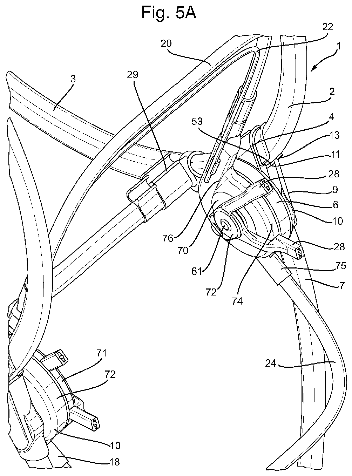

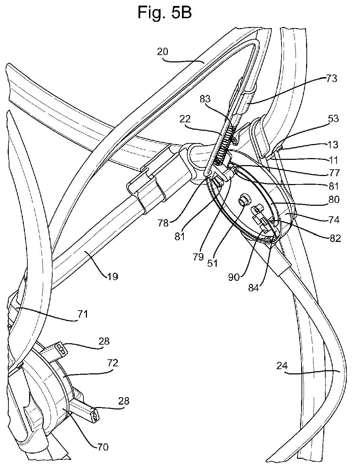

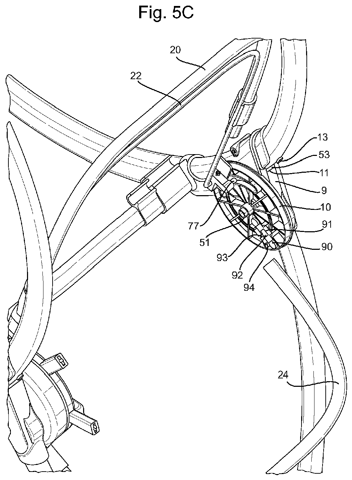

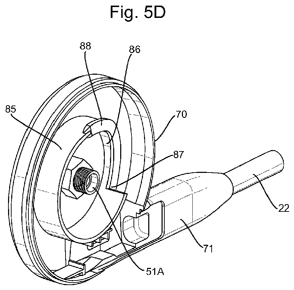

The seat unit 17 comprises a seat back 18 and a seat bottom 19. The seat back 18 is on a back support 22 and the seat bottom 19 on a seat bottom support 24. The seat back 18 can pivot about the pivot units 6 in respect of the seat bottom 19. A seat handle 20 (see figure 5) of an inverted U-shape extends around the top and either side of the seat back 18, when in use. The open ends of the U of handle 20 have lateral extensions urged by springs to engage in pockets in the surface of a cam in each pivot unit (discussed in detail in figures 5A to 5D). Pulling the seat handle 20 against the springs disengages the lateral extensions from the pockets allowing the back seat 18 to rotate in respect of the seat bottom 19. Release of the seat handle 20 will force the extensions into the next pocket when the seat back is rotated.

Normally there are three or four pockets corresponding to a normal seat position and two or three reclined positions, with a further pocket in each cam surface corresponding to the seat back 19 being folded down against the seat bottom 18.

An infant on the seat unit 17 seat can be protected by a cover 23mounted around the seat back support and supported on stays 28. The pivot unit 6 has a circular ratchet unit 72, which receives U-shaped stays 28 of the cover. The ratchet unit 72 enables the open ends of the U-shaped stays 28 to be held in different positions, so that the cover can be fully open as seen in figure 1, closed against handle 20 or partially retracted. The ratchet system is conventional and not described in detail.

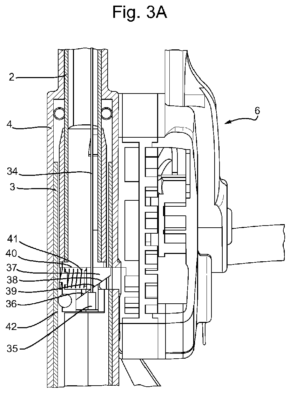

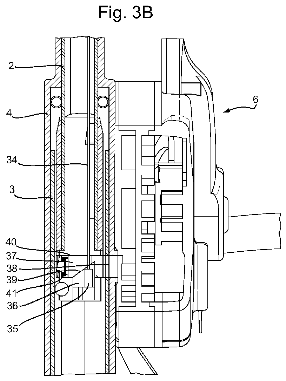

Hooks 25 (seen more clearly in figures 3A and 3B) are provided at the rear of lower members 3, baskets or bags may be attached to these, and, also, to be supported by a cross bar 26 near the bottoms of the lower members 3 and/or mouldings 31 onto which the wheels 5 are mounted. A second cross bar 29 supported by sleeves 4 is provided for lateral stability.

An open container 30 is also mounted on cross bar 26, supported at the front of the push chair in the U of the second frame 7.

The wheels 5 are braked using a conventional braking system 33 operated by pedals 32.

Figures 3A and 3B show a cross section of an upper and lower member 2 and 3, a pivot unit 6, and a first latch 37 mounted in the upper member 2 engaged with (figure 3A) and disengaged from (figure 3B) and aperture in the wall 38 of lower member 3. In figure 3B the upper member 2 is released to telescope with lower member 3. A cable 34 extends to the release button 15 in handle 14. Depression of the release button 15 pulls the cable 34 upwards. The cable 34 pulls a bolt 35 upwards. The top of the bolt 35 has an inclined surface 36 engaging against a corresponding surface 39 on first latch 37. The latch 37 is mounted in a horizontal housing 40 and is urged into aperture 38 in sleeve 4 and upper member 2 by a spring 41 in the housing 40. The spring 41 will also drive bolt 35 back to its original position when latch 37 is engaged in aperture 38. Upward movement of the bolt 35 causes its inclined surface 36 to push against corresponding inclined surface 39 disengaging latch 37 from the aperture 38. This in turn releases upper member 2 to slide into lower member 3, so telescoping these two members together and collapsing the push-chair. The bolt 36 is mounted in a vertical housing 43 fixed inside member 2.

By pushing down on cross bar 26, the lower members 3 can forced downwards with respect to upper member 2, restoring the members 2 and 3 to their operation position, and allowing first latch 37 to re-engage aperture 37, so locking the members 2 and 3 together in their normal operating position. Bushes protecting the edges of aperture 38 and around the inside of member 3, and a bearing between member 3 and member 2, have not been described in detail but can be seen in figures 4A and 4B.

Figures 4A and 4B illustrate the operation of the second latch.

Each pivot unit 6 has a second sleeve 9 mounted in a rotatable member 10, the open arms of second frame 7 are supported in the second sleeves 9. The rotatable member 10 has a central pivot 51 about which it can rotate. Each sleeve 4 also has an aperture 11 at its top through which stud actuator 13 may pass to contact the surface 53 a link member 12 to a second latch 56. When the pushchair is in normal use, actuators 13 on upper members 2 are separated from link members 12. However, when the first latch 37 is operated as described in figures 3A and 3B, the actuators 13 are brought into contact with the link member 12. In the example shown, the actuator 13 then passes through the aperture 11 to engage against the surface 53 on the link member 12. The link member 12 has a vertical slot 54, engaged by a pin 55. The side of the link member 12 has an indent having a concave surface 57 into which a nose 58 on the end of the second latch 56 engages. The second latch 56 is mounted in a housing 59, whose axis is aligned with the axis of an end of second frame 7. A spring 60 urges nose 58 into pocket 57.

A shallow cylindrical portion 61 surrounds the rotatable member 10 and is shaped to prevent rotation of rotatable member 10, when the nose 58 of latch 56 is engaged in pocket 57, as seen in figure 4A.

As the upper member moves 2 into the lower member 3, the link member 12 is depressed, forcing latch 56 backwards into its housing, against spring 60 (see figure 4B), releasing the rotatable member 10 to rotate anticlockwise (as seen in the view in figure 4B) about its pivot 51, with second frame 7 moving towards its folded position.

Subsequently, raising upper member 2 with respect to lower member and rotating second frame 7 in a clockwise direction (as in the view in figure 4B), the nose 58 of latch 56 will be forced by spring 60 back into engagement with pocket 57, forcing the link member 12 upwards back to its pushchair open position.

Figures 5 illustrated the operation of the seat reclining mechanism.

In figure 5A, the seat back support 22 is shown with the seat back itself removed passing into a tangential extension 71 of a first hub member 70 of the pivot unit 6. The cover stays 28 are shown mounted into a ratchet unit 72 on the side of the side of the hub member 70. The first hub member 70, the ratchet unit 72 and the rotatable member 10 (discussed in relation to figure 4) have the same common pivot 51. Also seen in figure 5A are the upper and lower members 2 and 3 of rear frame 1 the cross member 29, sleeve 4 and sleeve 9 of pivot units 6 in which the second frame 7 is mounted. The seat handle 20 is shown supported in handle guides 73 on the seat back support 22. The seat handle 20 passes into the first hub member 70.

The seat bottom support 24 is shown with the seat bottom itself removed passing into a tangential extension 75 of a second hub member 74 of pivot unit 6.

Figure 5B is like figure 5A but shows the ratchet unit 72, the first hub 70 and the cover of its tangential extension 71 removed on one side of the push chair. The seat handle 20 is fixed to the side of a bracket 78, with a peg 77, extending laterally from the arm 79 into a pocket 81 in a cam 80 extending around the upper part of second hub 73. Three pockets 81 are provided towards the rearward side of cam 80, corresponding to the seat back being in a normal sitting position and in two reclined positions, and one pocket 82 forward corresponding to the seat being in a folded position.

The bracket 78 is urges away from the bottom of the seat back support 22 by a spring 83 mounted within the tangential extension 71 between the bottom of the seat back support 22 and the arm 79 of the bracket 78. The spring 83 thus keeps the peg 77 in a pocket 81 or 82, until the seat handle 20 is lifted in respect of the seat back support 22. Once lifted the peg can move on the surface of cam 80 in a track 83 between the wall of the second hub and the cam 80. End stops 84 are provided at either end of track 83 to prevent over rotation on the seat handle 20 and thus the seat back support 22. The seat back 18 (figure 1) can be moved between a normal seating position, two reclined positions and a fully folded position.

Visible in figure 5B is one side of a safety interlock 90. The operation of the safety interlock 90 is described further in figures 5C to 5D.

Figure 5C is like figure 5B but with the second hub removed. The peg 77 extends through the track 83 in the second hub into a slot 91 on the opposite side of rotatable member 10 to the sleeve 9. The slot 91 corresponds in arc length to the arc length between all pockets 81 and 82 in cam 80. In other words, the peg is free to move in slot 92 while the seat is upright, or folded, by the end of slot 92 prevents further rotation of the seat unit 17 while the rotatable member is fixed in its normal push-chair open position. However, once the rotatable member 10 is released (as described in figure 4) to rotate about pivot 51, the peg 77 may rotate with it, thus allowing the seat unit to be rotated with the rotation of second frame 7 against the lower members 3 of rear frame 1. The safety interlock 90 prevents this occurring prematurely. The safety interlock has a T shaped cut out 91 with a cross portion 92 and a narrow stem portion 93. The safety interlock 90, engages with and can be disengaged from a radial slot 94 formed in the rotatable member 10.

Looking at figure 5D which shows the reverse side of the first hub 70 to that shown in figure 5A. The first hub has the tangential extension 71 onto which seat back support 22 is fixed. Concentric with the pivot hole 51A, is a safety interlock support 85, the support 85 is partially at a fixed depth, over an arcuate length 86 corresponding to the arcuate travel distance of the peg 77 between the stops 84 in figure 5B, the length is topped with a cross piece 88, the T-section 91 of the safety catch 90, when assembled would be engaged with the cross piece 88. The depth of the safety catch support decreases sharply to a position 87 corresponding position on the on the interlock support 85 of the safety interlock 90 when the peg 77 is engaged with pocket 82 and the seat folded (figure 5B).

When the safety interlock 90 is at the position of minimum depth on the safety interlock support 85, the safety interlock 90 is withdrawn from the radial slot 94 figure 5B. Until safety interlock is withdrawn as described, the rotatable member 10 is fixed in potion relative to the first hub, and it is, at that, stage impossible to move latch 56 (figures 4) or to depress link member 12. The prevents the actuator 13 moving, stopping the full telescoping of the rear frame and preventing rotation of the second frame to its folded away position. With this safety feature, it is not possible therefore, accidentally, to fold the pushchair until anyone in the pushchair is removed and the seat folded away, unless the seat is fully folded first.

Modifications are possible. In particular, the actuator 13 can be mounted in close proximity to the link member 12, with the second frame 7 being folded against the rear member 1 before the upper side members 2 are entirely telescoped into the lower side members 3. Alternatively, the upper members 2 are formed with cam surface down their lengths continually engaging with the link members 12 when they are being slid into the lower side members 3. In either case the lower member 3 will be profiled so that the upper side members can telescope into the lower side members as described.

In a further variation, apertures 38 are provided one above the other in the lower side members 3 so that the latched 37 may engage with the lower side members 3 in different potions, so that the height of the handle piece 14 above the ground can be varied.

In a further variation a rearward facing container frame is mounted on the second cross member 29. The container frame may contain a basket or other load carrier. In this case the container 30 and its mounting may be omitted.

## Claims

1. A pushchair comprising a rear frame (1) and a second frame (7), rear wheels (5) and a least one front wheel (8), the second frame pivotally (7) mounted by a pair of pivot units (6) on the rear frame, and in which the second frame (7) may assume one of two stable positions with respect to the rear frame (1), the first position being a locked, unfolded position projecting substantially forwards with respect to the rear frame and the second, folded, position being substantially adjacent the rear frame (1) when the pushchair folded, wherein when the pushchair unfolded, the second frame (7) projects forwards of the rear frame (1), the rear wheels (5) are mounted on the rear frame (1); the at least one front wheel (8) is mounted on the second frame (7); the rear frame (1) is arcuate in side view; each of the pivotal units (6) is forward of a vertical plane between centres of the rear wheels (5) and an upper part of the rear frame when the pushchair is in the unfolded position; wherein the rear frame comprises pairs of upper (2) and lower (3) spaced apart members which are telescopic, **characterised in that** the upper members (2) telescope into the lower members (3), **in that** the pivot units (6) are mounted on the rear frame around the telescoping upper and lower members (2 and 3) and whereby the rear frame (1) has first latches through the upper members of the rear frame, said first latches (37) releasing the upper members (2) to telescope into the lower members (3); and whereby at least one upper member (2) has an actuator (13) to engage a link member (12) to a second latch, whereby engagement of the second latch (56) with the link member (12) through telescoping of the rear frame releases the second latch (56) to allow rotation of the second frame with respect to the rear frame.

2. A pushchair according to claim 1 **characterised in that** the actuator (13) comprises studs projecting from the upper members.

3. A pushchair according to claim 1 or 2 **characterised in that** the pushchair comprises a handle (20) and a seat unit (17) with a seat back (18) on a seat back support (22) and seat bottom (19) on a seat bottom support (22), the seat bottom support (24) being mounted on the pivot units (6), the seat back support (22) being pivotal about the seat bottom support (24) wherein the seat back support (22) has at least one spring urged side extension (78) and a releasing mechanism, when the seat back support (22) is moved towards the handle (20) said releasing mechanism (79) releasing said spring urged extension (78) of the seat back support from a pocket (81) in the surface of a cam (80) mounted in a pivot unit allowing the seat back support (22) to rotate, and the spring to drive the extensions into a pocket on the cam surface (80) when the seat back support (22) is released.

4. A pushchair according to claim 3 **characterised in that** at least one pivot unit (6) has a safety interlock preventing rotation of the second frame (7) about the rear frame (1) unless the seat unit (17) is folded.

5. A pushchair according to claim 3 or 4 **characterised in that** the seat unit (17) may take up normal or reclined positions, and in such normal seated or reclined positions, the rear frame (1) is locked in its extended position.

6. A pushchair according to claim 5 characterised that in the normal seated or reclined positions, the actuator (13) cannot be brought into contact with the second latch (56) until the seat back (18) is folded against the seat bottom (19).

## Patentansprüche

1. Kindersportwagen, umfassend einen hinteren Rahmen (1) und einen zweiten Rahmen (7), Hinterräder (5) und mindestens ein Vorderrad (8), wobei der zweite Rahmen schwenkbar (7) durch ein Paar Schwenkeinheiten (6) am hinteren Rahmen montiert ist, und in dem der zweite Rahmen (7) eine von zwei stabilen Positionen in Bezug auf den hinteren Rahmen (1) einnehmen kann, wobei die erste Position eine verriegelte, aufgeklappte Position ist, die im Wesentlichen
nach vorn in Bezug auf den hinteren Rahmen vorsteht und die zweite zusammengeklappte Position, im Wesentlichen neben dem hinteren Rahmen (1) liegt, wenn der Kindersportwagen zusammengeklappt ist, wobei
wenn der Kinderwagen aufgeklappt ist,
der zweite Rahmen (7) nach vorn von dem
hinteren Rahmen (1) vorsteht, wobei die Hinterräder (5) am hinteren Rahmen (1) montiert sind; das mindestens eine Vorderrad (8) am zweiten Rahmen (7) montiert ist; der hintere Rahmen (1) in der Seitenansicht bogenförmig ist; jede der Schwenkeinheiten (6) vor einer vertikalen Ebene zwischen
Mittelpunkten der Hinterräder (5)
und einem oberen Teil des hinteren Rahmens liegt, wenn sich der Kindersportwagen in aufgeklappter Position befindet; wobei der hintere Rahmen Paare
von oberen (2) und unteren (3) voneinander beabstandeten Elementen umfasst, die teleskopisch sind, **dadurch gekennzeichnet, dass** die oberen Elemente (2) in die unteren Elemente (3) teleskopieren,
dass
die Schwenkeinheiten (6) am hinteren Rahmen um die teleskopierbaren oberen und unteren Elemente (2 und 3) montiert sind und wobei der hintere
Rahmen (1) erste Riegel durch die oberen Elemente des hinteren Rahmens aufweist, wobei die ersten Riegel (37) die oberen Elemente (2) freigeben, um in die unteren Elemente (3) zu teleskopieren; und wobei mindestens ein oberes
Element (2) ein Stellorgan (13) aufweist, um ein Verbindungselement (12) mit einer zweiten Verriegelung in Eingriff zu bringen, wobei der Eingriff der zweiten Verriegelung (56)
mit dem Verbindungselement (12)
durch Teleskopieren der hinteren Rahmens
die zweite Verriegelung (56) freigibt, um eine Drehung des zweiten Rahmens in Bezug auf den
hinteren Rahmen zu ermöglichen.

2. Kindersportwagen nach Anspruch 1 **dadurch gekennzeichnet, dass** das Stellorgan (13) Stollen umfasst, die aus den oberen Elementen vorstehen.

3. Kindersportwagen nach Anspruch 1 oder 2, **dadurch gekennzeichnet, dass** der Kindersportwagen einen Griff (20) und eine Sitzeinheit (17) mit einer Sitzlehne (18) auf einer Sitzlehnenstütze (22) und einer Sitzfläche (19) auf einer Sitzflächenstütze (22) umfasst, wobei die Sitzflächenstütze (24) an den Schwenkeinheiten (6) montiert ist, wobei die Sitzlehnenstütze (22) um die Sitzflächenstütze (24) schwenkbar ist, wobei die Sitz
lehnenstütze (22) mindestens eine federbelastete Seitenverlängerung (78) und einen Entriegelungsmechanismus aufweist, wobei, wenn die Sitzlehnenstütze (22) in Richtung des Griffs (20) bewegt wird, der Entriegelungsmechanismus (79) die federbelastete Verlängerung (78) der Sitzlehnenstütze aus einer Tasche (81) in der Oberfläche eines Nockens (80) freigibt, der in einer Schwenkeinheit montiert ist, wobei ermöglicht wird, dass sich die Sitzlehnenstütze (22) dreht und die Feder die Verlängerungen in eine Tasche an der Nockenoberfläche (80) treibt, wenn die Sitzlehnenstütze (22) freigegeben wird.

4. Kindersportwagen nach Anspruch 3, **dadurch gekennzeichnet, dass** mindestens eine Schwenkeinheit (6) eine Sicherheitsverriegelung aufweist, die eine Drehung des zweiten Rahmens (7) um den hinteren Rahmen (1) verhindert, sofern die Sitzeinheit (17) nicht zusammengeklappt ist.

5. Kindersportwagen nach Anspruch 3 oder 4, **dadurch gekennzeichnet, dass** die Sitzeinheit (17) normale oder zurückgelehnte Positionen einnehmen kann und in solchen normalen sitzenden oder zurückgelehnten Positionen der hintere Rahmen (1) in seiner ausgefahrenen Position verriegelt ist.

6. Kindersportwagen nach Anspruch 5, **dadurch gekennzeichnet, dass** in den normalen sitzenden oder zurückgelehnten Positionen das Stellorgan (13) nicht mit der zweiten Verriegelung (56) in Kontakt gebracht werden kann, bis die Sitzlehne (18) gegen die Sitzfläche (19) geklappt ist.

## Revendications

1. Poussette comprenant un cadre arrière (1) et un second cadre (7), des roues arrière (5) et au moins une roue avant (8), le second cadre est monté pivotant (7) par une paire d'unités de pivot (6) sur le cadre arrière, et dans laquelle le second cadre (7) peut prendre l'une des deux positions stables par rapport au cadre arrière (1), la première position étant une position dépliée verrouillée faisant saillie sensiblement vers l'avant par rapport au cadre arrière et la seconde position, pliée, étant sensiblement adjacente au cadre arrière (1) lorsque la poussette est pliée,
lorsque la poussette est dépliée,
ledit second cadre (7) faisant saillie vers l'avant du
cadre arrière (1), lesdites roues arrière (5) étant montées sur le cadre arrière (1) ; l'au moins une roue avant (8) est montée sur le second cadre (7) ; ledit cadre arrière (1) est arqué en vue latérale ; chacune des unités de pivot (6) étant en avant d'un plan vertical entre
les centres des roues arrière (5)
et une partie supérieure du cadre arrière lorsque la poussette est dans la position dépliée ; ledit cadre arrière comprenant des paires d'éléments espacés supérieurs (2) et inférieurs (3) qui sont télescopiques, **caractérisée en ce que** les éléments supérieurs (2) s'emboîtent dans les éléments inférieurs (3),
**en ce que**
les unités de pivot (6) sont montées sur le cadre arrière autour des éléments télescopiques supérieur et inférieur (2 et 3) et moyennant quoi
le cadre arrière (1) possède des premiers verrous à travers les éléments supérieurs du cadre arrière, lesdits premiers verrous (37) libérant les éléments supérieurs (2) pour s'emboîter dans les éléments inférieurs (3) ; et moyennant quoi au moins un
élément supérieur (2) possède un actionneur (13) pour mettre en prise un élément de liaison (12) avec un second verrou, moyennant quoi la mise en prise du second verrou (56)
avec l'élément de liaison (12)
par emboîtement du cadre arrière
libère le second verrou (56) pour permettre la rotation du second cadre par rapport au cadre arrière.

2. Poussette selon la revendication 1, **caractérisée en ce que** l'actionneur (13) comprend des goujons faisant saillie des éléments supérieurs.

3. Poussette selon la revendication 1 ou 2, **caractérisée en ce que** la poussette comprend une poignée (20) et une unité de siège (17) avec un dossier (18) sur un support (22) de dossier de siège et un fond de siège (19) sur un support (22) de fond de siège, le support (24) de fond de siège étant monté sur les unités de pivot (6), le support de dossier de siège (22) étant pivotant autour du support de fond de siège (24), ledit support de dossier de siège (22) possédant au moins une extension latérale sollicitée par ressort (78) et un mécanisme de libération, lorsque le support de dossier de siège (22) est déplacé vers la poignée (20), ledit mécanisme de libération (79) libérant ladite extension sollicitée par ressort (78) du support de dossier de siège à partir d'une poche (81) dans la surface d'une came (80) montée dans une unité de pivot permettant au support de dossier de siège (22) de tourner, et au ressort d'entraîner les extensions dans une poche sur la surface de came (80) lorsque le support de dossier de siège (22) est libéré.

4. Poussette selon la revendication 3, **caractérisée en ce qu'**au moins une unité de pivot (6) possède un dispositif de verrouillage de sécurité empêchant la rotation du second cadre (7) autour du cadre arrière (1) à moins que l'unité de siège (17) ne soit pliée.

5. Poussette selon la revendication 3 ou 4, **caractérisée en ce que** l'unité de siège (17) peut prendre des positions normales ou inclinées, et dans ces positions normales assise ou inclinée, le cadre arrière (1) est verrouillé dans sa position étendue.

6. Poussette selon la revendication 5, **caractérisée en ce que** dans les positions normales assise ou inclinée, l'actionneur (13) ne peut pas être amené en contact avec le second verrou (56) tant que le dossier (18) n'est pas rabattu contre le fond de siège (19).
